# EUROPÄISCHE PATENTANMELDUNG

(11) **EP 1 881 581 A2**
(43) Veröffentlichungstag der Anmeldung: **23.01.2008**
(21) Anmeldenummer: 07014180.9
(22) Anmeldetag: 19.07.2007
(51) Int. Cl.: H02K 1/06, H02K 17/16, H02P 6/00

(54) **Frequenzumrichtergespeister Drehstrom-Asynchronmotor**

(30) Priorität: 19.07.2006 DE 102006033792
(71) Anmelder: Meyer, Rolf, 4310 Rheinfelden (CH)
(72) Erfinder: Meyer, Rolf, 4310 Rheinfelden (CH)

(57) **Zusammenfassung**

Bei einem frequenzumrichtergespeister Drehstrom-Asynchronmotor (11), der zum sicheren Betrieb eine Glättung der vom Frequenzumrichter (FU) gelieferten Strom- und Spannungspulse erfordert, ist eine Zusatzinduktivität vorgesehen, die durch ein erhöhtes Motorstreufeld realisiert wird. Die Zusatzinduktivität ist so bemessen, dass ein sicherer Betrieb ohne die üblicherweise zur Glättung der Strom- und Spannungspulse eingesetzten Motordrosseln möglicht ist.

## Beschreibung

In der Fertigungsindustrie werden vielfach leistungsstarke Drehstrom-Asynchronmotoren eingesetzt, die über Frequenzumrichter gespeist werden. Solche Motoren treiben häufig Werkzeugmaschinenspindeln an, die zur Bearbeitung von Werkstücken insbesondere zum Fräsen, Bohren und Schleifen dienen. Vor allem bei der zerspanenden Fertigung mit teilweise sehr hohen Fertigungstaktraten werden hohe Motorleistungen bei möglichst kleinen Abmessungen und möglichst kleinen Umformerleistungen gefordert. Typische Leistungsmerkmale solcher Asynchronmotoren sind: Drehzahl 30000 1/min, Frequenz 1000Hz, Leistung, 30kW.

Der Frequenzumrichter dient zur Drehzahlregelung. Bei einem Frequenzumrichter wird die feste Netzwechselspannung (50-60 Hz) durch eine Leistungselektronik z. B. mittels Pulsweitenmodulation in eine variable Wechselspannung mit variabler Frequenz umgewandelt. Die Frequenz der Ausgangsspannung des Frequenzumrichters variiert dabei typischerweise zwischen 0- 3000 Hz. Frequenzumrichter sind allgemein bekannt und z. B. in der DE-OS 103 53 896 bzw. WO-OS 00/27017 beschrieben.

Drehstrom-Asynchronmotoren für Werkzeugmaschinenspindeln sind normalerweise so ausgelegt, dass sie eine möglichst große Leistung bei konstanter Spannung über einen weiten Drehzahlbereich, den sogenannten Feldschwächbereich, liefern. Dies erfordert, dass die Drehmomentkurve, die die Abhängigkeit des Drehmoments von der Motordrehzahl angibt, möglichst hoch liegt.
Das Maximum der Drehmomentkurve d. h. das maximal erreichbare Drehmoment wird als Kippmoment bezeichnet. Hohe Drehmomente und damit ein großes Kippmoment sind nur erreichbar, wenn die Streufelder im Motor möglichst klein sind. Mit diesen Streufeldern (kurz Streuung genannt) sind entsprechende Induktivitäten verknüpft, die im elektrischen Ersatzschaltbild eines Drehstrom-Asynchronmotors als Streublindwiderstände bezeichnet werden.
Heutige leistungsstarke Asynchronmotoren werden so entwickelt, dass die Motorstreufelder möglichst minimiert sind, um so die gewünschten hohen Kippmomente zu erreichen.

Bei Frequenzumrichtern unterscheidet man zwischen reinen U/f- und feldorientierten Frequenzumrichtern. Bei U/f - Umrichtern wird die Ausgangsspannung U linear mit der Frequenz f erhöht.
Bei feldorientierten Frequenzumrichtern wird eine entkoppelte Einprägung des drehmomentbildenden und des flussbildenden Stromes ermöglicht. Die Führung des Flusses und des drehmomentbildenden Stromes erfolgt so, dass an jedem Betriebspunkt das größtmögliche stationäre Drehmoment zur Verfügung steht.

Beim Einsatz moderner leistungsstarker Drehstrom-Asynchronmotoren mit Frequenzumrichtern müssen für den einwandfreien Betrieb zum Teil so genannte Motordrosseln eingesetzt werden. Diese Motordrosseln mit einer Induktivität von typischerweise 0,15 mH haben vor allem als Aufgabe, die Schaltflanken der Strom- und Spannungspulse, die von den schnellen Halbleiterbauelementen im Frequenzumrichter erzeugt werden, zu reduzieren. Diese schnellen Schaltflanken haben verschiedene negative Auswirkungen, die durch den Einsatz von Motordrosseln verringert werden können.
Motordrosseln dienen u. a. zur Geräuschverminderung und erlauben die Verwendung längerer Motoranschlusskabel. Sie erhöhen die Lebensdauer von Isolationen bei Asynchronmotoren.
Sie dienen auch zur Verminderung von umrichterbedingten Erwärmungen und Verlusten bei den Statoren bzw. Rotoren.
Sie verringern außerdem durch die hiermit mögliche geringere Taktfrequenz die Erwärmung verschiedener Halbleiterbauelemente in den Frequenzumformern.

Mit dem Einsatz von Motordrosseln sind jedoch auch eine Reihe von Nachteilen verbunden, die nachfolgend im Einzelnen angegeben sind. Ein wesentlicher Nachteil ist der Preis der Motordrosseln. Sie sind relativ teuer; bis zu 500 € pro Stück.
Sie erfordern einen zusätzlichen Platzbedarf in den Schaltschränken, in denen die Frequenzumrichter normalerweise angeordnet sind. Sie führen auch zu einer zusätzlichen unerwünschten Erwärmung im Schaltschrank. Sie benötigen eine zusätzliche Verdrahtung, die unter Umständen EMV-Probleme verursachen kann.
Besonders störend ist jedoch der Leistungsverlust der auf die Motordrosseln zurückzuführen ist.

Das Drehmoment eines Drehstrom-Asynchronmotors ist nämlich in erster Näherung proportional zum Quadrat der am Motor anliegenden Spannung. Durch den Spannungsabfall, der zwangsläufig durch die Motordrosseln hervorgerufen wird, verringert sich die Leistung des Drehstrom-Asynchronmotors. Um diesen Leistungsverlust zu kompensieren, wären erheblich aufwendigere d. h. leistungsstärkere Frequenzumformer notwendig.

Aufgabe der Erfindung ist es deshalb einen frequenzumrichtergespeisten Drehstrom-Asynchronmotor anzugeben, der einen sicheren Betrieb ohne den Einsatz von Motordrasseln ermöglicht.

Gelöst wird diese Aufgabe durch die im Anspruch 1 angegebenen Merkmale. Vorteilhafte Weiterentwicklungen der Erfindung sind in den Unteransprüchen angegeben.

Die wesentliche Idee der Erfindung besteht darin, das Motorstreufeld bzw. die so genannte Motorstreuung so zu erhöhen, dass Motordrosseln insbesondere beim Betrieb mit einem feldorientierten Frequenzumrichter nicht mehr benötigt werden.

Erreicht wird diese gewünschte Erhöhung der Motorstreuung durch folgende Maßnahmen:
Erhöhung der Nutstreuung im Stator und Rotor durch: Vergrößerung des Streustegs hₛ₁ (hₛ₁>0,6 mm) im Stator bzw. durch Vergrößerung des offenen/geschlossenen Streustegs hₛ₂ (hₛ₂>0,5 mm) im Rotor.

Erhöhung der Stirnstreuung im Stator durch Verkleiden des Wickelkopfes mit einem ferromagnetischen Blech. Erhöhung der Stirnstreuung im Rotor durch Verkleiden des Kurzschlussring mit einem ferromagnetischen Stahlring (dadurch werden neben der höheren Streuung weitere Vorteile wie Einsatz als Wuchtscheibe und Abstützung des Kurzschussrings gegen Fliehkräfte, erzielt).

Erhöhung der doppeltverketteten Streuung (Oberwellenstreuung) durch: Verkleinerung der Nutenzahl pro Pol und Phase im Stator und Rotor; Einsatz einer Einschichtwicklung im Stator.

Erhöhung der Schrägungsstreuung durch Nutschrägung größer als eine Nutteilung wählen.
Die gegenteiligen Maßnahmen zu den oben angegebenen Maßnahmen sind dem Fachmann bekannt, da bisher allgemein das Ziel verfolgt wurde, die Motorstreuung möglichst zu minimieren.

Wie bereits erwähnt, erfolgt im feldorientierten Betrieb eines Drehstrom-Asynchronmotors, eine entkoppelte Einprägung des drehmomentbildenden und des flussbildenden Stromes. Die Führung des Flusses und des drehmomentbildenden Stromes ist dabei so, dass in jedem Betriebspunkt das größtmögliche stationäre Drehmoment zur Verfügung steht.

Der feldorientierte Frequenzumrichter zwingt dem Drehstrom-Asynchronmotor im Prinzip den Betrieb eines Synchronmotors auf. Die Höhe des Drehmoments eines Synchronmotors ist aber nur noch von der Stärke des magnetischen Flusses und des drehmomentbildenden Stromes abhängig. Streublindwiderstände spielen deshalb beim Betrieb eines Asynchronmotors mit einem feldorientierte Frequenzumrichter nur eine untergeordnete Rolle. Im Unterschied zum Betrieb mit einem Frequenzumrichter ohne Feldorientierung, wo die Streublindwiderstände eine größere Auswirkung haben.

Nachfolgend ist die Erfindung anhand eines in der Zeichnung dargestellten Ausführungsbeispiels näher erläutert.

Es zeigen:
Fig. 1 schematische Darstellung eines Drehstrom-Asynchronmotors mit Schaltschrankanschluss;
Fig. 2 schematische Darstellung eines Frequenzumrichters mit einem Drehstrom-Asynchronmotor nach Fig. 1;
Fig. 3 Drehstrom-Werkzeugmaschinenelektrospindel mit Asynchronmotor in Schnittdarstellung;

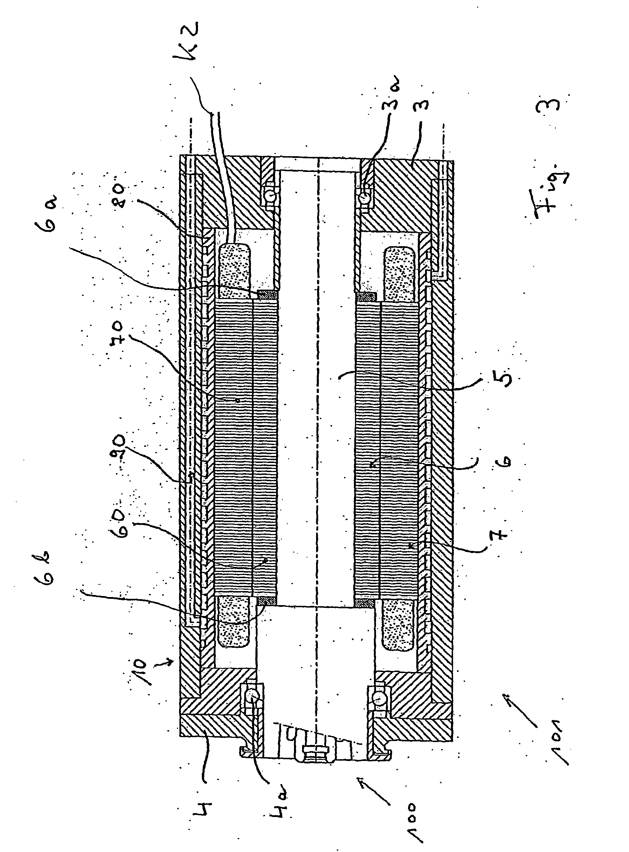

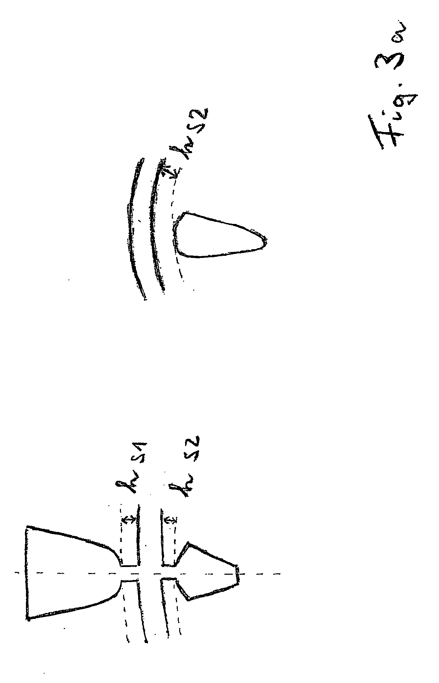

   Fig. 3 a Nutbereich eines Rotor- bzw. Statorblechs in Schnittdarstellung;

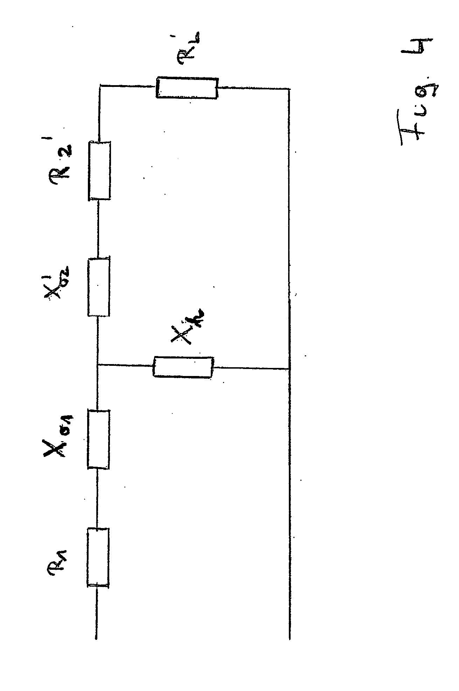

Fig. 4 elektrisches Ersatzschaltbild eines Drehstrom-Asynchronmotors;

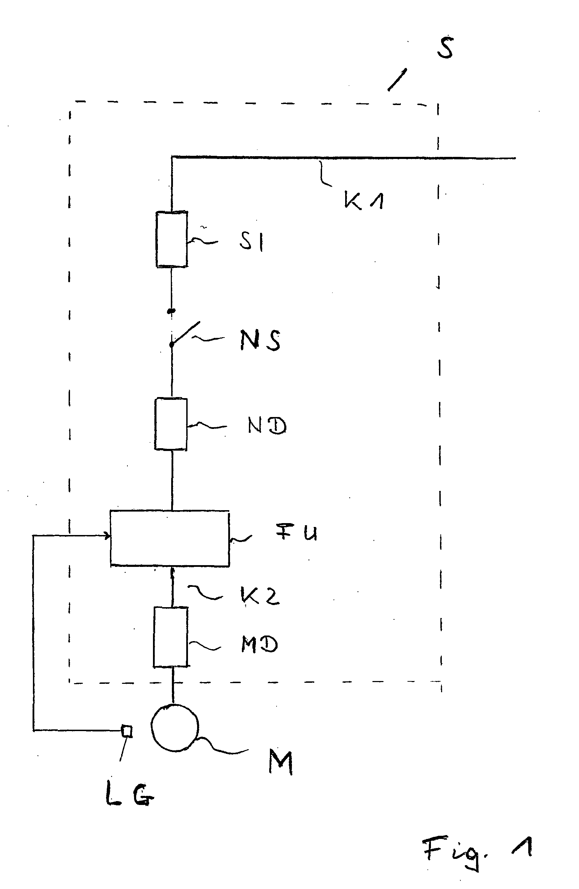

Fig. 1 zeigt einen typischen Schaltschrankaufbau für den Betrieb eines Drehstrom-Asynchronmotors.
Der Schaltschrank S ist mit dem öffentlichen Stromnetz über ein Anschlusskabel K1 verbunden.
Weiterhin sind eine Netzsicherung SI, ein Netzschütz NS und eine Netzdrossel ND vorgesehen. Der Netzdrossel ND ist ein Frequenzumrichter FU nachgeschaltet. Vom Frequenzumrichter FU führt ein Anschlusskabel K2 zum Motor M, der sich außerhalb des Schaltschranks S befindet. Der Motor M ist hier Teil einer nicht näher dargestellten Werkzeugmaschinenspindel. Von einem Lagegeber LG, der die Lage des Rotors des Motors M erfasst, führt eine Verbindungsleitung VL zum Frequenzumrichter FU. Am Anschlusskabel K2 ist eine Motordrossel MD vorgesehen.

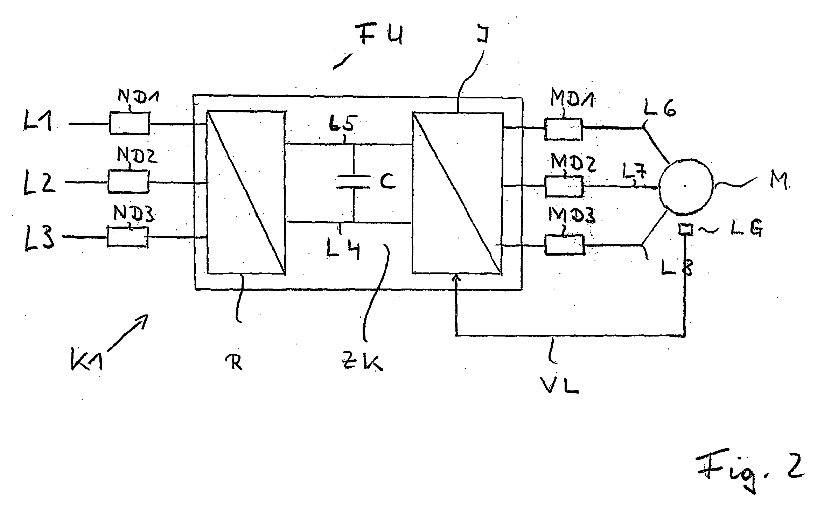

In Fig. 2 ist der Frequenzumrichter FU nach Fig. 1 mit den wichtigsten Komponenten näher dargestellt. Das Anschlusskabel K1 besteht aus 3 Einzelleitungen L1, L2, L3 die über Netzdrosseln ND zum Frequenzumformer FU führen. Die Netzdrossel ND besteht aus einzelnen Netzdrosseln die mit ND1, ND2, ND3 bezeichnet sind. Über einen Gleichstromzwischenkreis ZK ist ein Gleichrichter R mit einem Wechselrichter I verbunden. Der Gleichstromzwischenkreis besteht aus zwei Stromleitungen L4 und L5, die über einen Ausgleichskondenstor C miteinander verbunden sind. Der Ausgleichskondensator C dient zur Glättung des im Zwischenstromkreis fließenden Gleichstroms. Im Wechselrichter I wird der entsprechende Antriebsstrom für den Drehstrom-Asynchronmotor erzeugt. Über die Anschlussleitungen L6, L7, L8 ist der Wechselrichter I über Motordrosselspulen MD1, MD2, MD3 mit dem Drehstrom-Asynchronmotor M verbunden. Der Wechselrichter I arbeitet mit einer Pulsweitenmodulation zur Anpassung der Frequenz und Spannung des Drehstrom-Asynchronmotors M. Die Ansteuerefektronik für den Wechselrichter 1 ist nicht dargestellt. Vom Lagegeber LG führt eine Verbindungsleitung VL zum Frequenzumformer FU.

In Fig. 3 ist eine Werkzeugmaschinenspindel, die von einem Drehstrom-Asynchronmotor angetrieben wird, näher dargestellt. Typische Kenngrößen sind Leistung 30kW, Drehzahl 30000 U/min, Länge 420 mm, Durchmesser 170 mm.

Die Spindel weist einen Stator 7 und einem Rotor 6 auf, die in einem Spindelgehäuse 10 angeordnet sind. Das Spindelgehäuse 10 ist endseitig mit je einem Lagerschild 3 bzw. 4 verschlossen. Jedes der beiden Lagerschilde 3, 4 trägt die Lager 3a, 4a für die Spindelwelle 5, die mit einer Werkzeugaufnahmevorrichtung 100 ausgerüstet ist. An der anderen Seite der Elektrospindel befinden sich die Versorgungszuführungen z. B. Stromzuführung, Kühlmittel, Druckluft, Öl, Lagegeber etc..
Derartige Antriebe produzieren im Betrieb Verlustwärme. Diese Verlustwärme wird über eine massive Kühlhülse 80 abgeführt. Sie steht in direktem Wärmekontakt mit dem Statorblechpaket 70. Die Wärmeabfuhr erfolgt über ein Kühlmedium, in der Regel Wasser, das sich in einem Zwischenraum, der vom Spindelgehäuse 10 und der Kühlhülse 80 gebildet wird, befindet. Bei einem Statordurchmesser von 135 mm kann die Kühlhülse 80 eine Stärke von ca. 6 mm aufweisen.
Auf beiden Stirnseiten des Rotors 6 sind jeweils Kurzschlussringe 6a, 6b vorgesehen.

Bei Asynchronmotoren ist die Drehzahl n des Rotors im Motorbetrieb geringer als die Drehzahl n_{d} des antreibenden elektromagnetischen Drehfeldes. Im Normalbetrieb liegt das Verhältnis v der beiden Drehzahlen v = n/n_{d} zwischen 0.9 und 0.98. Das Kippmoment M_{K} wird typischerweise beim Wert v= 0.8 erreicht.

In Fig. 3a ist der Nutbereich eines Einzelblechs des Statorblechpakets und des Rotorblechpakets mit den entsprechenden Streustegen hₛ₁ und hₛ₂ dargestellt. Das Rotorblech hat einen Außendurchmesser von 79,5 mm.

In Fig. 4 ist ein elektrisches Ersatzschaltbild für einen Drehstrom-Asynchronmotor schematisch dargestellt.
R₁ ist der ohmsche Widerstand der Statorwicklung. Mit dem Streufluss (Streuung) im Stator ist eine Streuinduktivität L₁ und damit eine Streureaktanz Xₒ₁ verbunden.
Gleiches gilt für den Rotor mit dem ohmschen Widerstand R'₂ und der mit dem Streufifuss im Rotor verbunden Streuinduktivität L'₂ bzw. Streureaktanz X'_{σ2}.

Der Hauptfluss, durch den Stator und Rotor magnetisch miteinander gekoppelt, wird im Ersatzschaltbild als Hauptinduktivität Lₕ bzw. Hauptreaktanz Xₕ bezeichnet.
R_{L}' ist der Lastwiderstand an dem die abgegebene Leistung auftritt.

Die wesentliche Idee der Erfindung besteht darin den Streufluss im Motor (Motorstreuung) so zu erhöhen, dass die Motordrosseln MD1, MD2 und MD3 nach Fig. 2 wegfallen können.
Dem erhöhten Streufluss entspricht eine Zusatzinduktivität.
Die Motorstreuung kann durch eine oder eine Kombination mehrerer der folgenden Maßnahmen erhöht werden.

Erhöhung der Nutstreuung im Stator: Die Nutstreuung im Stator kann durch die Vergrößerung des Streustegs hₛ₁ (hₛ₁>0,6 mm) vergrößert werden. Typischerweise sind die Streustege bei einem Innendurchmesser des Nutblechs von 80 mm kleiner als 0.6 mm.
Erhöhung der Nutstreuung im Rotor: Die Nutstreuung im Rotor kann durch die Vergrößerung der offenen bzw. geschlossenen Streustege hₛ₂ (hₛ₂>0,5 mm) vergrößert werden. Typischerweise sind die Streustege bei einem Durchmesser des Rotorblechs von 79,5 mm kleiner als 0.5 mm.
Erhöhung der Stirnstreuung des Rotors: Kurzschlussring wird mit einem ferromagnetischen Stahlring verkleidet. Dadurch werden neben der höheren Streuung weitere Vorteile, wie Einsatz als Wuchtscheibe und Abstützung des Kurzschussrings gegen Fliehkräfte, erzielt.
Erhöhung der Stirnstreuung des Stators: Der Wickelkopf des Stators wird mit einem ferromagnetischen Blech verkleidet, um so die Streuung zu erhöhen. Erhöhung der doppeltverketteten Streuung (Oberwellenstreuung) im Stator und Rotor durch: Verkleinerung der Nutenzahl pro Pol und Phase im Stator und Rotor und/oder Einschichtwicklung im Stator.
Erhöhung der Schrägungsstreuung: Die Nutschrägung muss größer als eine Nutteilung gewählt werden.

Mit den oben angegebenen Maßnahmen kann die Motorstreuung so erhöht werden, dass die zum sicheren Betrieb mit einem Frequenzumformer notwendigen Motordrosseln entfallen können, ohne dass auf die Vorteile die mit den Motordrosseln verbunden sind, verzichtet werden muss.
Der Streublindwiderstand des Drehstrom-Asynchonmotors wird dadurch so erhöht, dass diese zusätzlichen Induktivitäten ausreichen, um die Aufgabe der Motordrosseln zu übernehmen.
Insbesondere wird dadurch eine ausreichende Glättung der vom Frequenzumformer gelieferten Strom- und Spannungspulse erzielt. Die Taktfrequenz der pulsweitenmodulierten Frequenzumrichter beträgt typischerweise 5 kHz.

Im Hinblick auf die Leistung des Drehstrom-Asynchronmotors ist von besonderer Bedeutung, dass der von den Motordrosseln verursachte Spannungsabfall entfällt.
Streublindwiderstände spielen bei einer feldorientierten Regelung eines Drehstrom-Asynchronmotors eine erheblich geringere Rolle.

Bei einem typischen Drehstrom-Asynchronmotor für die Fertigungsindustrie, sollte die gesamte Induktivität Motor plus Drossel größer als ca.. 0.15 mH sein.

Durch eine zusätzliche weitere Erhöhung der Motorstreuung, können auch die umformerbedingten Rotorverluste (Erwärmung) verringert werden. Dies wirkt sich auch in längeren Standzeiten für die Lager aus.
Bei verschiedenen Anwendungen kann ganz allgemein durch die Zusatzinduktivität die Rotorerwärmung verringert werden, was sich ebenfalls in längeren Lagerstandzeiten auswirkt.

Die oben erläuterte Erfindung kann auch auf Synchronmotoren angewendet werden. Insbesondere kann hier die Motorstreuung durch folgende Maßnahmen erhöht werden: Erhöhung der Nutstreuung, Erhöhung der Stirnstreuung und die hier mögliche Erhöhung der Zahnkopfstreuung.

Bisher wurde bei der Entwicklung von Elektromotoren immer ein anderes Ziel verfolgt, nämlich die Motorstreuung möglichst zu minimieren. Die hierfür notwendigen Maßnahmen sind dem Fachmann allgemein bekannt. Zur Realisierung der vorliegenden Erfindung werden jedoch gerade die entsprechenden gegenteiligen Maßnahmen vorgeschlagen.

## Patentansprüche

1. Frequenzumrichtergespeister Drehstrom-Asynchronmotor, wobei zum sicheren Betrieb eine Glättung der vom Frequenzumrichter gelieferten Strom- und Spannungspulse notwendig ist, **dadurch gekennzeichnet,**
**dass** die Glättung der Strom- und Spannungspulse induktiv über eine Zusatzinduktivität erfolgt, die über das Motorstreufeld des Drehstrom-Asynchronmotors realisiert wird, wobei die Zusatzinduktivität so bemessen ist, dass ein sicherer Betrieb ohne den üblicherweise zur Glättung der Strom- und Spannungspulse eingesetzten Motordrosseln ermöglicht wird.

2. Drehstrom-Asynchronmotor nach Anspruch 1, **dadurch gekennzeichnet, dass** die Zusatzinduktivität größer als 0.01 mH ist.

3. Drehstrom-Asynchronmotor nach einem der vorhergehenden Ansprüche, **dadurch gekennzeichnet, dass** die Zusatzinduktivität, durch eine der folgenden Maßnahmen oder eine beliebige Kombination dieser Maßnahmen realisiert wird:
a) erhöhte Nutstreuung im Stator oder Rotor
b) erhöhte Stirnstreuung im Stator oder Rotor
c) erhöhte doppeltverkettete Streuung im Stator oder Rotor
d) erhöhte Schrägungsstreuung

4. Frequenzumrichtergespeister Synchronmotor, wobei zum sicheren Betrieb eine Glättung der vom Frequenzumrichter gelieferten Strom- und Spannungspulse notwendig ist, **dadurch gekennzeichnet,**
**dass** die Glättung der Strom- und Spannungspulse induktiv über eine Zusatzinduktivität erfolgt, die über das Motorstreufeld des Synchronmotors realisiert wird, wobei die Zusatzinduktivität so bemessen ist, dass ein sicherer Betrieb ohne den üblicherweise zur Glättung der Strom- und Spannungspulse eingesetzten Motordrosseln ermöglicht wird.
